# EUROPÄISCHE PATENTSCHRIFT

(11) **EP 2 127 913 B1**
(45) Veröffentlichungstag und Bekanntmachung des Hinweises auf die Patenterteilung: **23.11.2011**
(21) Anmeldenummer: 09161536.9
(22) Anmeldetag: 29.05.2009
(51) Int. Cl.: B60C 15/024, B60C 19/00

(54) **Fahrzeugreifen mit seitlichem Stützprofil**
Vehicle tyres with side support profile
Pneu de véhicule doté d'un profilé d'appui latéral

(30) Priorität: 30.05.2008 DE 102008002123
(43) Veröffentlichungstag der Anmeldung: 02.12.2009
(73) Patentinhaber: Ventrella, Michele, 81675 München (DE)
(72) Erfinder: Ventrella, Michele, 81675 München (DE)
(74) Vertreter: Gille Hrabal Struck Neidlein Prop Roos

(56) Entgegenhaltungen:
- DE-A1- 10 113 203
- DE-T2- 60 206 166
- US-A- 5 591 282
- US-A1- 2002 066 513

## Beschreibung

Die Erfindung betrifft einen Fahrzeugluftreifen mit einer Reifenwulst, die eine Karkasse, die um Kernringe und Kernreiter umgeschlagen ist, aufweist, wobei wenn der Reifen auf eine Felge montiert ist zwischen einer Reifenseitenwandaußenseite und einem Felgenhorn ein druckfestes Stützprofil derart ausgebildet ist, dass der Reifenwulst und die Reifenseitenwand in Richtung der Felgenmitte bewegt wird.

Moderne luftgefüllte Fahrzeugreifen als unmittelbare Kontaktpartner des Fahrzeug-Gesamtsystems zur Fahrbahn stellen mit ihren Gebrauchseigenschaften einen entscheidenden Beitrag zu den Fahreigenschaften zur Verfügung. Dies gilt in besonderen Maße für die Fahrsicherheit und den Fahrkomfort.

Der bekannte elastische Reifen sitzt von der Luftfüllung gespannt quasi in einer Gleichgewichtslage symmetrisch auf der Radfelge. Beim Abrollen plattet er sich dann unter der Radlast auf der Fahrbahn so ab, dass die beiden Seitenwände bei Geradeausfahrt gleichmäßig ausbeulen. Dabei stellt der Reifen dem Fahrwerk über einen möglichst großen vertikalen Federweg einen entscheidenden Anteil an dessen Komforteigenschaften zur Verfügung.

Wird dagegen der kurvenäußere elastische Reifen bei Kurvenfahrt von den seitlich auf ihn einwirkenden Querkräften belastet, so verformt er sich der Kraftrichtung folgend (durch Verzerrung seiner beiden Seitenwände) zur Fahrzeugmitte, d. h. er nimmt nun eine belastungsabhängige asymmetrische Querschnittsform ein. Diese seitliche Formänderung des belasteten Reifenquerschnitts führt bekanntlich zu Verlusten von für einen sicheren Fahrbetrieb wichtigen Eigenschaften, insbesondere in den so genannten instationären Betriebszuständen, in denen die Reifen großen Lastschwankungen unterliegen. Während also der elastische Reifen bei Geradeausfahrt dem Fahrwerk nahezu ideale Eigenschaften zur Verfügung stellen kann, bedeutet die unvermeidliche asymmetrische Verformung bei Kurvenfahrt die Einschränkung von Lenkeigenschaften und die Verringerung der Übertragung von Kräften, insbesondere Seitenkräften. Neben dem Reifeninnendruck und der Gürtelkonstruktion hat die konstruktive Gestaltung der Reifenseitenwände den dominanten Einfluss auf die fahrdynamische Charakteristik von Reifen. So befindet sich in der Reifenseitenwand nämlich nicht nur eine leicht verformbare, weich einfedernden Zone mit membranähnlichen Eigenschaften, sondern direkt daran angebunden auch eine in radialer Richtung verlaufende, konstruktiv verstärkte, extrem biegesteife Wulstzone, welche eben nicht einfedern, sondern nur möglichst verformungsarm hohe Seitenkräfte übertragen soll (was nur bedingt erreicht wird).

Autoreifen sind pneumatische Federsysteme, und verformen sich unter betriebsbedingten Reaktionskräften elastisch federnd sowohl radial (durch dynamisch wechselnde Radlast), lateral (bei Schräglauf, Seitenwind, Spurrillen und anderen Störkräften) als auch tangential (aus umlaufender Verformung vom Kreisbogen in die kürzere Bodenaufstandssehne), also in alle im dynamischen Fahrbetrieb vorkommenden Kraftrichtungen.

Diese permanente Verformungsarbeit der Reifenschale ist eigentlich nur in radialer Kraftrichtung zur Bildung der Gürtelplatte, und zur komfortablen Einfederung über die biegeweichen Membranzonen der Seitenwände erwünscht, während sich die lateralen zur Fahrzeugmitte gerichteten und tangentialen Verformungen durchweg nachteilig auf die Gebrauchseigenschaften auswirken (z. B. durch Verlust von Lenk- und Stabilitätseigenschaften bei lateraler Deformation bzw. hohen Rollwiderstand infolge "umlaufender Wellen" der Gürtelstruktur mit den anhängenden Seitenwänden in tangentialer Kraftrichtung). Die fahrdynamische Abstimmung der Reifenfeder hinsichtlich Handling und Komfort ist deshalb immer, eine Abwägung zwischen Zielkonflikten, Darüber hinaus erzeugen die betriebsbedingten Verformungen infolge innerer Reibung der Gummimasse Wärme, die im Wulstbereich der oberhalb der Kernringe als Kragträger wirkenden Kernreiter bzw. Wulstfahnen sehr hohe Arbeitstemperaturen erreichen kann, Diese Umwandlung von Antriebsenergie in Abfallwärme stellt einen Energieverlust dar, der reduziert werden sollte.

Hierzu wird der mit Kernreiter und geeignetem Umschlag, der Karkassenlage bzw. weiteren konstruktiven Verstärkungen, ausgestattete biegesteife Seitenwandwulst auf dem metallischen Kernring so gelagert, sodass alle lateralen Kräfte wie von einem einseitig eingespannten Kragträger übertragen werden können. Dennoch führen aber bei Kurvenfahrt hohe Querkräfte im Bereich der Bodenkontakt-Zone auf einer genormten Radfelge zu pendelartigen Auslenkungen der sehr steifen Wulstkonstruktion, wobei sich dieser Teil der Reifenseitenwand auf dem relativ großen Radius des Felgenhorns, zu dem bei Geradeausfahrt kein formschlüssiger Kontakt besteht, unter relativen Bewegungen abrollt, sodass um dieses Maß die laterale Verformung des hochbelasteten üblichen Reifens insgesamt nachteilig vergrößert wird. Um diese sicherheitsrelevanten Eigenschaftsverluste zu verringern wurde z. B. vorgeschlagen, den Reifen durch asymmetrische Ausbildung der Radfelge so zu unterstützen, dass er sich weniger bei Kurvenfahrt nach innen verspannt. Darüber hinaus sind auch Reifen-Konstruktionen bekannt (z. B. US 5,749,982), die durch asymmetrische Querschnittsformen, zum Teil sogar durch ungleich lange Seitenwände (DE 29 09 427 C2), dem Eigenschaftsverlust bei Kurvenfahrt entgegen wirken sollen.

Aber auch durch oberhalb des genormten Felgenhorns angeformte so genannte Felgenschutzleisten (rim protector), die als Schutz vor Bordsteinkontakten das Horn seitlich überragen, wurde vergeblich versucht, die versteifende Wirkung des Reifenwulst im Interesse besserer Seitenführungseigenschaften des symmetrisch auf der Radfelge sitzenden Reifens zu erhöhen. Dem Reifen aus DE-26 55 764 A sind Felgenschutzleisten zu entnehmen. Auch US-5,443,105 und EP-1 036 675 A2 offenbaren Reifen mit symmetrischen Aufbau. Die Felgenschutzleisten sind auf beiden Seiten identisch vorgesehen und dienen nicht der Vorspannung des Reifens, sondern als Felgenschutz.

DE-27 47 622-A befasst sich mit einer bewährten Karkasse, mit beidseitiger Felgenschutzleiste aus dem üblicherweise verwendeten Material von Reifen welches nicht druckfest ist. Es handelt sich dabei um einen typischen symmetrischen Aufbau.

DE-36 16 199 A offenbart einen Reifen, der einen vollkommen symmetrischen Aufbau ohne steife Wülste und druckfeste Stützprofile aufweist,

US 5,591,282 offenbart einen Fahrzeugluftreifen mit einem Keilformigen Stützprofil welches an die Anßenseite der Seitenwand gefrigt ist.

DE 101 13 203 B4 als gattungsbildender Stand der Technik offenbart einen Fahrzeugluftreifen mit einer Karkasse, deren Festigkeitsträger um Kernringe umgeschlagen sind, wobei zwischen einer Reifenseitenwandaußenseite und einem Felgenhorn ein druckfestes Stützprofil derart angeordnet ist, um den Reifenwulst und die Reifenseitenwand in Richtung der Felgenmitte zu bewegen. Dabei wird das Stützprofil als integraler beim Fertigungsprozess seitlich angeformter Bestandteil der Festigkeitsstruktur des Reifens beschrieben. In Praxistest hat sich gezeigt, dass beim derartigen Reifen unter ungünstigen Betriebsbedingungen der gewünschte Vorspannwinkel nicht dauerhaft eingehalten werden kann. Außerdem erschweren erhöhte Eigensteifigkeiten am Reifenfuß auch dessen für die Reifenmontage erforderliche Ovalisierung, um den im Umfang kleineren Reifenfuß über den deutlich größeren Umfang des Felgenhorns zu ziehen. Neben den erschwerten Montagearbeiten erhöhen die lokal notwendig werdenden großen Montagekräfte auch die Gefahr von Beschädigungen am Reifenfuß.

Der Erfindung liegt daher die Aufgabe zugrunde, einen verbesserten Reifen zu schaffen.

Diese Aufgabe wird durch einen Reifen mit den Merkmalen nach Anspruch 1 oder 4 gelöst. Vorteilhafte Ausgestaltungen der Erfindung sind Gegenstand der Unteransprüche.

Erfindungsgemäß wird in einer ersten Ausführungsform vorgeschlagen, dass der im Wulstbereich als Kragträger wirkende Kernreiter auf Höhe des dort anliegenden Felgenhorns eine zum Felgenhorn gerichtete Ausformung erhält. Das daraus resultierende Drehmoment löst in äußerst wirksamer Weise eine Drehbewegung des Wulstbereichs um den darunter liegenden Kernring aus, Der Fertigungsablauf kann nahezu unverändert bleiben, da lediglich der erfindungsgemäß veränderte Kernreiter statt des normalen eingesetzt wird. Diese gegebenenfalls auf der äußeren Seite zusätzlich verstärkte Ausführungsform zeichnet sich außerdem auch durch eine besonders fertigungsfreundliche Struktur aus, bei welcher z. B. der Wulstumschlag der Karkassenlage direkt zwischen Kernreiter und Felgenhorn "eingeklemmt" wird. Damit sind an dieser empfindlichen Stelle gefürchtete Relativbewegungen nicht mehr möglich.

Experimentelle Untersuchungen haben gezeigt, dass die durch die seitliche Ausformung unter Reifeninnendruck eingeleitete und zur Radaußenseite gerichtete Verschiebung des Reifenquerschnitts im Kontaktbereich zur Fahrbahn durch die im Rollkontakt einwirkenden vertikalen Radlasten vorteilhaft verstärkt wird. Deren Wirkung auf die jeweils zur Radaußenseite verschobenen Reifenseitenwände gehen in die gleiche Richtung und verstärken die Schrägstellung. Die vertikale Einfederung erhöht also zusätzlich die gewünschte Vorspannung. Beim Fahrzeug ergibt sich somit, dass die innere Reifenseitenwand zur Felgenmitte verschoben wird und die äußere Reifenseitenwand von der Felgenmitte weg verschoben wird. Es ergibt sich somit eine stabilisierende Spurverbreiterung, die unter Vertikallast sogar zunimmt,

Die am gattungsbildenden Stand der Technik beobachteten potentiellen Nachteile wurden in Praxistests nicht mehr beobachtet. Es wird vermutet, dass infolge der über die seitensteife Gürtelstruktur im Laufstreifen bestehende Anbindung der radäußeren Seitenwand und Wulste deren Walkarbeit durch die auf der radinneren Seite eingeleiteten Vorspannung deutlich reduziert wird. Durch die erfindungsgemäße Verschiebung der Seitenwände stellt sich infolge der Vorspannung vermutlich eine Änderung des unter Sturz laufenden Rades ein. Diese dynamisch bedingte Sturzänderung müsste sich im Verhältnis der nominal bedingten Radlast-Überhöhung einstellen, Eine vorteilhafte Folge dieser Sturzwinkeländerung wäre z. B. dass die Aufstandsfläche des belasteten Reifens nun weitgehend parallel zur Fahrbahnoberfläche geführt wird, und damit die übliche drastische Reduzierung der Aufstandsfläche vermieden werden kann. Dies wird vermutlich auch durch die beobachtete Unterdrückung von schädlichen Pendelschwingungen bestätigt, die bekanntlich ohne Vorspannung der Reifenfeder in lateraler Kraftrichtung über den gesamten Umfang destabilisierend auf die Führungseigenschaften wirken.

Der erfindungsgemäße Reifen ist nach der Montage auf den heute verwendeten Radfelgen unter Reifeninnendruck asymmetrisch gegen die von der Radaußenseite wirkenden Querkräfte vorgespannt und so im Vergleich zu den heute üblichen symmetrisch auf der Radfelge sitzenden Reifen auch infolge seiner aus der form- und kraftschlüssigen Abstützung des als Drucklager wirkenden erfindungsgemäß ausgebildeten Stützprofils direkt auf dem oberen Rand des üblichen Felgenhorns insgesamt deutlich geringer in Kraftrichtung verformt. Dies ergibt eine Verbesserung der Reifen-Gebrauchseigenschaften innerhalb der jeweils gegebenen Reifen-Dimensionen (z. B. 195/65R15) in den Kriterien Seitensteifigkeit (Geradeausstabilität - Kurvenfahrt - Bremsen), Abrieb, Rollwiderstand und Komfort. Die auf der Radinnenseite verlaufende Seitenwand des Reifens wird innerhalb der Höhe des üblichen Felgenhorns durch den erfindungsgemäß ausgebildeten versteiften Kernreiter in einem Winkel zwischen 5° und 20°, vorzugsweise zwischen 11° und 1 6°, zur Felgenmitte zu gekippt, ohne dass es in der Festigkeitsstruktur der Reifenseitenwand zu kritischen Druckspitzen oder unverträglichen Steifigkeitssprüngen kommt.

Da sich das neuartige Stützprofil auch auf dem oberen Rand des gegebenen Felgenhorns abstützt, vergrößert sich somit auch die Anlagefläche des Reifenfußes in der Felge entsprechend vorteilhaft und ein Durchrutschen gegen die Felge wird erschwert. Hierdurch wird der Reifen, der in seiner sonstigen Festigkeitsstruktur unverändert bleiben kann, unter Reifeninnendruck zwangsläufig vorteilhaft vorgespannt. Der vorgespannte, sich nun mit einer hohen Pressung gegen das innere Felgenhorn (bis auf dessen oberen Rand) des Rades abstützende Reifen ist zwar in seiner vertikalen Einfederung nicht behindert, da er der vorgegebenen lateralen Vorspannrichtung folgt - also seitlich zur Reifenaußenseite ausweichen kann. Jedoch überträgt er die auf Ihn einwirkenden Querkräfte spontaner, was sich im Lenkgefühl (straff, mit gutem Center point feeling) und Lenkverhalten (kleinerer Lenkwinkel) positiv bemerkbar macht. Gleichzeitig kann der Reifen mit der erfindungsgemäßen Ausbildung des auf der Innenseite des Rades verlaufenden Reifenfußes durch die wirksame vorgespannte Abstützung die seitliche Verformung erheblich reduzieren, sodass auch höhere Seitenkräfte übertragen werden können. Durch das als form- und kraftschlüssiges Drucklager ausgebildete "Stützprofil" vergrößert sich an dieser Stelle auch die Reibfläche des Reifens in Bezug auf den sicheren tangentialen Sitz des Reifens auf der Radfelge, sodass auch die Gefahr von auf der Felge durchrutschenden Reifen (beim Bremsen oder Beschleunigen) vorteilhaft verringert wird. Mit dem erfindungsgemäßen Vorschlag kann die Festigkeitsstruktur des Reifens im unmontierten und drucklosen Zustand auch weiterhin symmetrisch ausgeführt sein. Die vorspannende Wirkung wird ursächlich durch die neuartige äußere Kontur des Stützprofils an einer der beiden Reifenseitenwände auf Höhe des inneren Felgenhorns erzeugt, insbesondere bei Reifeninnendruck.

Der verwendete Reifen könnte darüber hinaus zur weiteren Unterstützung der gesuchten Stabilitätsverbesserung gegen die von der Kurvenaußenseite wirkenden Störkräfte auch in den übrigen Teilen seiner Konstruktion unsymmetrisch ausgelegt werden.

Wenn der Kernreiter aus unterschiedlich festen, insbesondere unterschiedlich druckfesten Werkstoffen besteht; kann der für die unterschiedlichen Funktionsabschnitte des Reiters optimale Werkstoff bzw. Eigenschaft ausgewählt werden. Z. B. wenn der Kernreiter Zonen unterschiedlicher Festigkeit aufweist, wobei vorzugsweise die zum Felgenhorn gerichtete Ausformung eine andere, vorzugsweise höhere, Festigkeit als der übrige Kernreiter aufweist, kann einerseits ein zum Abstützen optimaler Werkstoff ausgewählt werden, während der übrige Kernreiter aus der bewährten Zusammensetzung besteht. Unterschiedliche Festigkeit kann beispielsweise durch unterschiedliche Shorehärte und/oder Druckfestigkeit gegeben sein.

Die obengenannten Aufgabe der Erfindung kann alternativ, d. h. mit oder ohne den modifizierten Kernreiter auch wie folgt gelöst werden: Es wird ein ringförmiges asymmetrisches Stützprofil vorgeschlagen, welches einerseits in Lateralrichtung und Umfangsrichtung hochfest bzw. hochdrucksteif ist, in Radialrichtung jedoch flexibel, und dessen dem Reifenfuß zugewandte Stützfläche unter Luftdruck ein zur Radmitte gerichtetes Drehmoment des Reifenwulstes um den im Felgensitz befindlichen Kernring auslöst. Durch die auf die ursprüngliche Biege bzw, Drehbewegung des Wulstbereichs (um den Kernring) ausgelegte abstützende Anordnung des Stützprofils zu dem nach außen gerichteten Radius des Felgenhorns wird der anliegende Wulstbereich bezüglich seiner Verformbarkeit hochwirksam entlastet, was sich nicht nur im fahrdynamischen Verhalten, sondern auch maßgeblich über dessen reduzierte, energiezehrende Verformung im Rollwiderstandsverlust bemerkbar macht. Infolge der optimierten Abstützung "gegen und auf" das Felgenhorn wird die Walkarbeit der unter dynamisch überhöhten Radlasten und Seitenkräften stehenden Reifen vorteilhaft reduziert. In vergleichenden Reifenmessungen konnte nachgewiesen werden, dass die vom erfindungsgemäßen Stützprofil erzeugte asymmetrische Verschiebung der Reifenschale mit ihren inneren und äußeren Reifenseitenwänden zu einer Reduzierung der Vertikalsteifigkeit führt.

Hochfeste Zugmittel im Sinn der Erfindung sind solche Materialien, die im Fahrbetrieb ein Vergrößern des Umfangs des Stützprofils verhindern, welches zu einem Rutschen über das Felgenhorn führen würden. Ein flexibles Material im Sinn der Erfindung ist flexibel genug, um ovalisiert zu werden, ermöglicht also ein Aufziehen auf die Felge zusammen mit dem Reifen, d. h. ein Aufziehen der Einheit Reifen-Stützprofil, Nicht ovalisierbar wäre z. B. ein steifer Metallring, da diese nur mit ganz erheblichen, im Reifenwerkstattbetrieb unüblichen Kräften aufgezogen werden könnte. Anderseits ist im Sinn der Erfindung das flexible Material drucksteif genug, um die gewünschte Vorspannung erzeugen zu können.

Eine derartige Lösung hätte mehrere Vorteile: Flexible, aber druck- und zugfeste Stützprofile, beispielsweise mit einer hochzugfesten Draht- oder Aramid-Wicklung, können an den Reifenkörper anvulkanisiert werden. Da diese hinreichend ovalisierbar sind, entstehen keine Probleme bei der Reifenmontage. Die Anvulkanisation könnte vorzugsweise unmittelbar nach dem Ausformen des Reifenkörpers unter Ausnutzung der hohen Prozesswärme erfolgen, oder auch später.

Es wird also vorgeschlagen, dass alternativ zur integralen Fertigung von Reifenschale und Stützprofil, beide Elemente auch getrennt vulkanisiert werden können, und vorzugsweise unter Ausnutzung der nach Ausformung der Reifenschale noch verfügbaren Prozesswärme (bis zu 160°) das Stützprofil werkzeuggestützt und kraftschlüssig am radinneren Reifenfuß anzubinden (z.B, durch Vulkanisation oder Kleben).

Das nachträgliche Fügen des ringförmigen Stützprofils, z. B. im Rahmen üblicher Nachvulkanisation von gebrauchten Reifen, ermöglicht eine preiswerte und resourcenschonende Aufwertung bestehender Reifen zur Erzielung der obenbeschriebenen Vorteile, Derartig erneuerte Reifen sind neuen, handelsüblichen Reifen in Sachen Fahrstabilität und Bremsverhalten überlegen.

Weitere Vorteile ergeben sich aus der folgenden Beschreibung und der beigefügten Zeichnung. Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter. Dabei zeigt
- Fig. 1: die erste Lösung der Aufgabe; und
- Fig. 2: eine alternative Lösung.

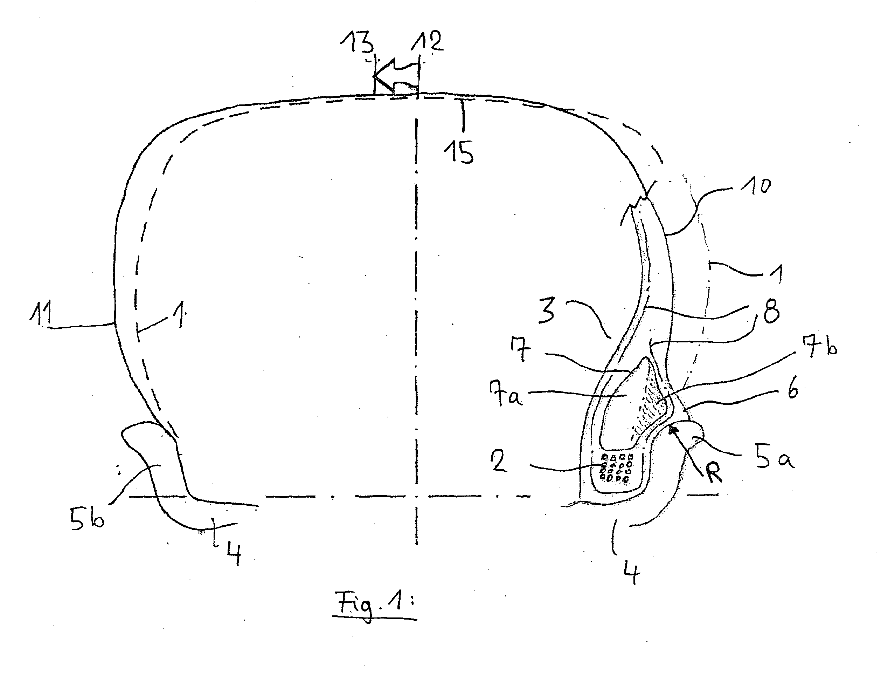

Fig. 1 stellt gestrichelt die symmetrische Außenkontur eines unter Reifeninnendruck auf einer üblichen Radfelge 4 gespannten, aber noch unbelasteten, also unverformten üblichen Reifens 1 ohne Stützprofil dar, so wie er sich in seinem statischen Gleichgewichtszustand befindet. In diese Konfiguration ist die neuartige Außenkontur 11 eines nahezu baugleichen Reifens überlagert, die sich bei erfindungsgemäßer Ausführung des an der dem Felgenhorn 5a auf der Radinnenseite zugeordneten Seitenwand 10 mit Stützprofil 6 ergibt. Der erfindungsgemäße Reifen verläuft nun mechanisch verschoben unsymmetrisch in Relation zur Mittelachse 12 der gebräuchlichen Radfelge, sodass sich die Laufstreifenmitte 13 um dieses Maß zur Radaußenseite verlagert hat. Die Begriffe Radinnenseite und Radaußenseite beziehen sich auf die auf ein Fahrzeug aufgezogenen Felgen bzw. Reifen und sind wie allgemein üblich als "zum Fahrzeuginneren" und "vom Fahrzeug weg" weisende Seiten zu verstehen. Das erfindungsgemäße Stützprofil befindet sich stets an der Radinnenseite, ebenso das dieses gegenstützende Felgenhorn.

Im Einzelnen zeigt die Fig. 1 den nicht vollständigen Querschnitt eines bekannten Reifens 1 der mit seinen durch Kernringe 2 und Kernreiter 7 (nicht bei dem bekannten Reifen in Fig. 1 dargestellt) verstärkten Reifenfüßen, die radial nach außen verlaufende biegesteife Wulstverstärkungen 3 bilden, an den Felgenhörnern 5a, 5b einer Radfelge 4 anliegen. Der bekannte Reifen nimmt im Querschnitt mit dem äußeren Laufstreifen 15 eine symmetrische Gleichgewichtskontur ein. Dabei liegt die Mittelachse 12 des Reifenlaufstreifens etwa auf der Mittelachse des Felgenbettes. Der Wulstumschlag der Karkassenlage 8 ist um den Kernreiter 7 und den Kernring 2 gefaltet,

Des Weiteren zeigt die Fig. 1 das erfindungsgemäße drucksteife Stützprofil 6 das sich formschlüssig gegen und auf dem inneren Felgenhorn 5a abstützt, und die Seitenwände des luftgefüllten Reifen nun kraftschlüssig in eine neue Querschnittskontur 10, 11 asymmetrisch zur Radaußenseite verschiebt - siehe Pfeil von 12 nach 13. Hierdurch verlagert sich auch schon im unbelasteten Zustand die Mittelachse des Laufstreifens relativ zur Mittelachse der Radfelge weiter zur Radaußenseite. Diese Wirkung verstärkt sich aber unter vertikaler Einfederung des belasteten Reifens noch etwas, Erfindungsgemäß weist der Kernreiter 7a auf Höhe des dort anliegenden Felgenhorns 5a eine zu diesem Felgenhorn gerichtete Ausformung 7b auf. Diese gibt dem Material, also der Karkasse und dem äußeren Gummimantel, welches ohnehin an dieser Stelle des Reifens vorgesehen ist, die stützende Form, so dass keine seitliche Anformung an die Seitenwand des Reifens mehr nötig ist, wie sie im Stand der Technik DE 101 13 203 B4 beschrieben ist. Der Wulstumschlag der Karkassenlage 8 ist um die Ausformung 7b des Kernreiters 7 und den Kernring 2 geführt und daher direkt zwischen Ausformung 7b und Felgenhorn 5a eingeklemmt. Der Kernreiter 7, 7a ist als Teil der Wulstzone auf Höhe des dort anliegenden Felgenhorns 5a ausgebildet und weist eine zum Felgenhorn gerichtete Ausformung 7b auf zur Bildung des Stützprofils und schafft somit eine drehsteife Lagerung und Abstützung des am radinneren Felgenhorn anliegenden Reifenwulst/Reifenfuß.

Die durch das drucksteife Stützprofil 6 ausgelöste seitliche Verschiebung des biegesteifen Wulst, 3 die zu der neuen Kontur 10, 11 der Reifenseitenwände führt, erzeugt die gesuchte unsymmetrische Vorspannung einer z. B. im drucklosen und unbelasteten Zustand symmetrischen Reifenschale.

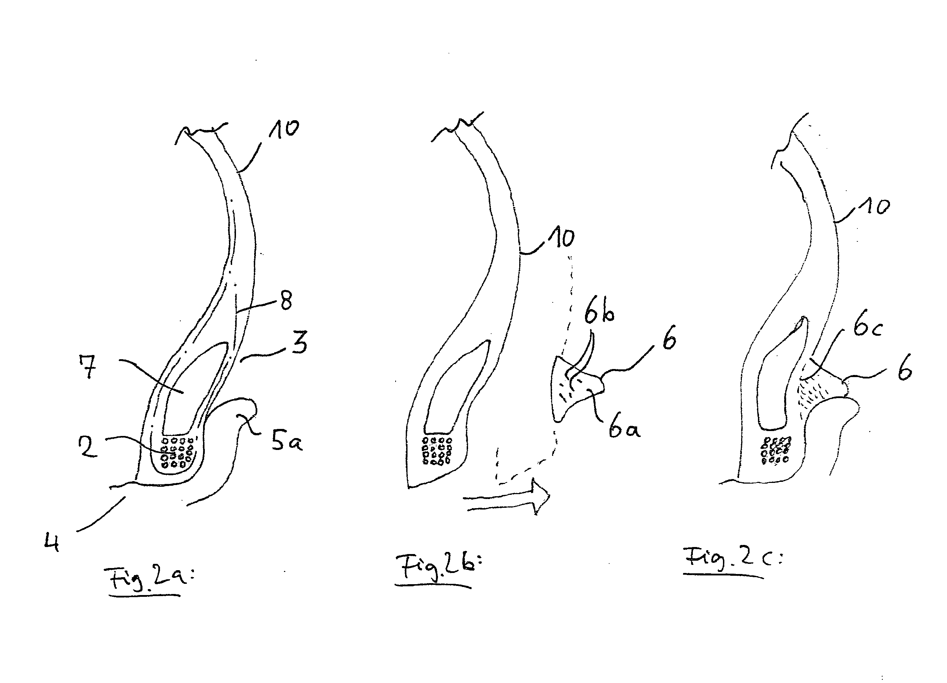

Das Stützprofil 6 liegt in dem Kontaktbereich mit dem oberen Rand des Felgenhorns 5a an diesem an. Das Felgenhorn 5a hat dabei einen bestimmten Radius R in diesem Kontaktbereich, der bei üblichen Fahrzeugreifen, insbesondere PKW-Reifen, bei R=9,6 mm liegt. Es wurde festgestellt, dass die Fahreigenschaften sich verbessern, wenn das Stützprofil 6 in dem genannten Kontaktbereich einen Radius aufweist, der kleiner als der Felgenhornradius R ist. Der Radius des Stützprofil beträgt dabei vorzugsweise 9,0 - 9,59 mm und insbesondere vorzugsweise 9,4 - 9,55 mm. Ferner wird ein unter allen Betriebsbedingungen optimaler Sitz gesichert. Diese Werte für den Radius des Stützprofil gelten auch für die alternative Ausgestaltung gemäß Fig. 2

Fig. 2a stellt den Reifenfuß 2, 7, 8, 3 vor der Überholung auf der Felge 4 ohne Stützprofil 6 dar. Der nicht-vollständige Querschnitt des bekannten Reifens 1 liegt mit seinen durch Kernringe 2 und Kernreiter 7 verstärkten Reifenfüßen, die radial nach außen verlaufende biegesteife Wulstverstärkungen 3 bilden, an dem Felgenhorn 5a einer Radfelge 4 an. Der Wulstumschlag der Karkassenlage 8 ist um den Kernreiter 7 und den Kernring 2 gefaltet.

Bei der Überholung in Fig. 2b wird das erfindungsgemäße ringförmige Stützprofil 6 in Höhe des Felgenhorns 5a an die Reifensseitenwand 10 anvulkanisiert. Dieses umfasst ein flexibles, aber hinreichend druckfestes Material 6a und Wicklungen 6b aus hinreichend zugfestem Material, Das druckfeste Material 6a kann beispielsweise durch eingemischte druckfeste Partikel gebildet werden, z. B. hochfester Kunststoff, Metallspäne oder - körper, die auch optional als in Kraftrichtung orientierte Verstärkungseinlagen ausgebildet sein können.

Danach zeigt die Fig. 2c das erfindungsgemäß entlang der Fügelinie 6c anvulkanisierte drucksteife Stützprofil 6, das sich formschlüssig gegen und auf dem inneren Felgenhorn 5a abstützt, und die Seitenwände des luftgefüllten Reifen nun kraftschlüssig in eine neue Querschnittskontur asymmetrisch zur Radaußenseite verschiebt. Der Reifen erfährt dadurch die unter Fig. 1 beschriebene Vorspannung.

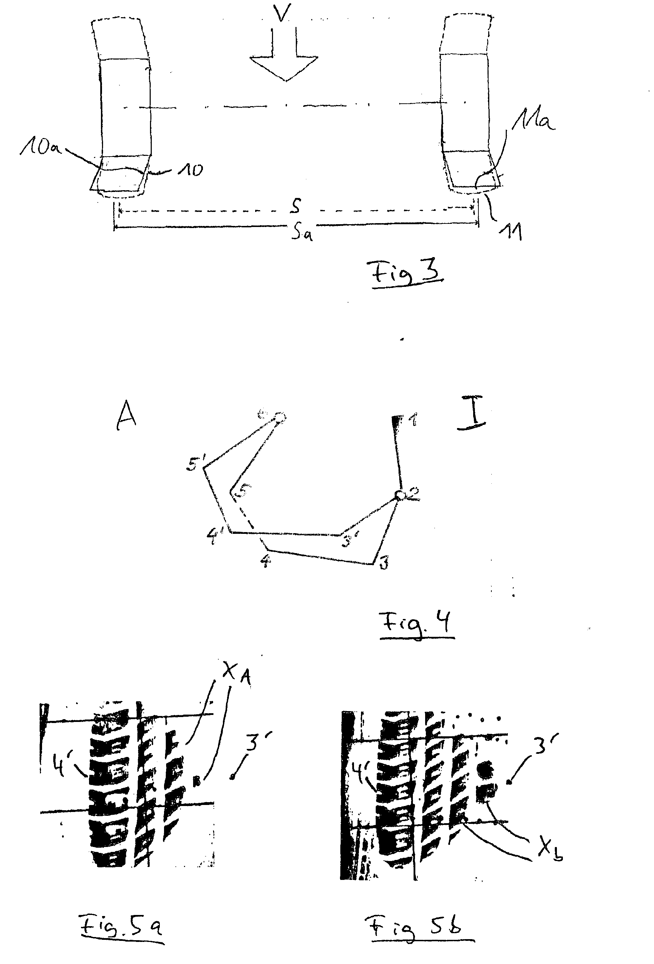

Fig. 3 zeigt, dass bei einem Fahrzeug die durch die seitliche Ausformung unter Reifeninnendruck eingeleitete und zur Radaußenseite gerichtete Verschiebung des Reifenquerschnitts 11 im Kontaktbereich zur Fahrbahn durch die im Rollkontakt einwirkenden vertikalen Radlasten V vorteilhaft verstärkt wird. Deren Wirkung auf die jeweils nach außen und somit spurverbreiternd (von S zu Sa) verschobenen Reifenseitenwände 10, 10a bzw. des Reifenquerschnitts 11, 11a geht in die gleiche Richtung und verstärkt die Schrägstellung, wobei mit Bezugszeichen 10a bzw. 11a die Stellung der Seitenwand bzw. des Reifenquerschnitts unter zusätzlicher Vertikallast V bezeichnet ist. Beim Fahrzeug ergibt sich somit eine stabilisierende Spurverbreiterung (von S zu Sa), die unter weiterer Vertikallast sogar zunimmt. Der Reifen ist also derart ausgestaltet, dass unter Vertikallast die radinnere Reifenseitenwand der lateralen Verformung folgend weiter in Richtung Felgenmitte einfedern kann, insbesondere so, dass eine Spurverbreiterung bewirkt wird. Gleichzeitig wird dieser Kinematik folgend die vertikale Steifigkeit fahrkomfortsteigernd reduziert.

Fig. 4 erläutert die in Richtung zur Radaußenseite A gerichtete Vorspannung durch das Stützprofil an der Radinnenseite 1, wobei die nachfolgenden Bezugszeichen ausschließlich für Fig. 4 und 5 gelten: Die Bezugszeichen 1-6 bezeichnen die charakteristischen Punkte der Reifenschale unter Luftinnendruck im unbelasteten, d. h. von der Fahrbahn abgehobenen, Zustand, während die Bezugszeichen 3'- 5-'die davon abweichenden Punkte im belasteten Zustand kennzeichnen. Dabei bedeutet
1: drehsteife Lagerung des radinneren Reifenfußes
2: Haltepunkt für die oberen Reifenschale
3: radinnere Gürtelschulter
4: radäußere Gürtelschulter
5: radäußeres Seitenwand-Gelenk
6: gelenkige Lagerung des radäußeren Reifenfußes

Die in Richtung zur Radaußenseite A gerichtete Vorspannung der Reifenschale durch das Stützprofil 1,2 führt bei vertikaler Einfederung, also unter Last, infolge der vorgegebenen lateralen Verformung, zur nach Außen A gerichteten Ausweichbewegung der Gürtelplatte bzw. Aufstandsfläche 3-4. Dabei ist vor allem zu erkennen, dass der Reifen derart ausgebildet ist, dass im unbelasteten Zustand die radinnere Gürtelschulter 3 weiter von der Drehachse des Reifens entfernt ist, als die radäußere Gürtelschulter 4. Erst beim Aufstellen auf den Untergrund im belasteten Zustand, sind die radinnere Gürtelschulter 3' und radäußere Gürtelschulter 4' durch die Einfederung der membranartigen Seitenwände 2 - 3'wieder gleich weit von der Drehachse des Reifens entfernt. Dies führt dazu, dass die radinnere Gürtelschulter 3' bei Kurvenfahrt in Richtung Radinneres 1 länger den Kontakt mit der Fahrbahn halten kann, als dies mit konventionellen Reifen möglich wäre. Es ist daher bevorzugt, dass die radinnere Lauffläche des Reifens einen größeren Umfang, vorzugsweise 0,2 - 1 % mehr Umfang, als die radäußere Lauffläche des Reifens aufweist. Bei üblichen PKW-Reifen macht dies ca, 2 - 6 mm Umfangsunterschied aus.

In der Kurvenfahrt wird somit erreicht, dass bei zunehmendem Sturzwinkel infolge der zunehmenden Seitenkraft die zunehmende Winkeländerung der Aufstandsfläche zur Senkrechten durch das Aufrichten der inneren Seitenwand kompensiert wird. Bei Kurvenfahrt nach rechts In Fig. 4 würde sich die radinnere Gürtelschulter 3' infolge der nach rechts wirkenden Seitenkräfte nach rechts bewegen und dabei würde sich das Segment 2-3' steiler aufstellen, Im Ergebnis wird die radinnere Gürtelschulter 3' nach unten in Richtung Fahrbahn gedrückt, was den Fahrbahnkontakt verbessert. Diese Wirkung belegen Versuche, wie in Fig 5a und 5b dargestellt. Es handelt sich um die gemessenen Aufstandsflächen eines linken Fahrzeugreifens in einer Rechtskurve. Links ist somit die radäußere Gürtelschulter 4' zu erkennen, Beim konventionellen Reifen in Fig. 5a hebt aber die radinnere Gürtelschulter 3' ab, weshalb die radinneren Profilstollen Xa kaum Kontakt mit der Fahrbahn haben. Der erfindungsgemäße Reifen in Fig. 5b zeigt dagegen, dass sogar weite Teile der radinneren Gürtelschulter 3' und radinneren Profilstollen Xb Fahrbahnkontakt haben. Auch fällt hier die Profilkantendeformation am radäußeren Profilstollen 4' geringer aus.

## Patentansprüche

1. Fahrzeugluftreifen (1) mit einer Reifenwulst (3), die eine Karkasse (8), die um Kernringe (2) und Kernreiter (7, 7a, 7b) umgeschlagen ist, aufweist,
wobei, wenn der Reifen auf eine Felge (4) montiert ist, zwischen einer radinneren Reifenseitenwandaußenseite und einem radinneren Felgenhorn (5a) ein druckfestes Stützprofil (6) derart ausgebildet ist, dass der Reifenwulst (3) und die Reifenseitenwand (10) in Richtung der Felgenmitte bewegt wird,
**dadurch gekennzeichnet, dass**
der Kernreiter (7, 7a) auf Höhe des dort anliegenden Felgenhorns (5a) eine zum Felgenhorn gerichtete Ausformung (7b) aufweist zur Bildung des Stützprofils.

2. Fahrzeugreifen nach einem der vorherigen Ansprüche, **dadurch gekennzeichnet, dass** der Kernreiter (7, 7a, 7b) aus unterschiedlich festen Werkstoffen besteht, insbesondere derart, dass der dem Felgenhorn zugewandte Teil (7b) des Kernreiters den Reifenwulst (3) und die Reifenseitenwand (10) in Richtung der Felgenmitte zu bewegen vermag.

3. Fahrzeugreifen nach einem der vorherigen Ansprüche, **dadurch gekennzeichnet, dass** der Kernreiter (7, 7a, 7b) Zonen unterschiedlicher Festigkeit, z. B. Shorehärte und/oder Druckfestigkeit, aufweist, wobei vorzugsweise die zum Felgenhorn gerichtete Ausformung (7b) eine andere, vorzugsweise höhere, Festigkeit als der übrige Kernreiter (7a) aufweist.

4. Fahrzeugluftreifen (1) mit den Merkmalen des Oberbegriffs des Anspruchs 1,
wobei das Stützprofil an die Reifenseitenwandaußenseite gefügt ist, insbesondere durch Verkleben oder Vulkanisieren
**dadurch gekennzeichnet, dass**
das Stützprofil in Umfangsrichtung hochfeste Zugmittel aufweist und in Radialrichtung flexibel ist.

5. Fahrzeugreifen nach Anspruch 4, **dadurch gekennzeichnet, dass** als Zugmittel hochzugfester Draht oder Aramid vorgesehen ist, insbesondere in Form von In Umfangsrichtung verlaufenden Wicklungen.

6. Fahrzeugreifen nach Anspruch 4 oder 5, **dadurch gekennzeichnet, dass** als flexibles Material Gummi, insbesondere mit einer Shore Härte von mindestens 60, vorgesehen ist.

7. Fahrzeugreifen nach einem der vorherigen Ansprüche, **dadurch gekennzeichnet, dass** der Reifenwulst (3) biegesteif ist.

8. Fahrzeugreifen nach einem der vorherigen Ansprüche, **dadurch gekennzeichnet, dass** beide Reifenseitenwände (10, 11) durch das Stützprofil (6) gleichsinnig bewegbar sind, so dass der Reifenkörper in lateraler Kraftrichtung gegen äußere Reaktionskräfte vorgespannt werden kann.

9. Fahrzeugreifen nach einem der vorherigen Ansprüche, **dadurch gekennzeichnet, dass** die Ausformung (7b) derart ausgebildet ist, dass die biegesteife Reifenwulst (3) des auf der Felge montierten und unter betriebsüblichem Luftinnendruck stehenden Reifens (1) zwischen 5° und 20°, vorzugsweise zwischen 11° und 16°, aus der Senkrechten zum Felgeneckpunkt in Richtung der Felgenmitte kippbar ist, sodass der Reifen einen asymmetrischen Querschnitt erhält.

10. Fahrzeugreifen nach einem der vorherigen Ansprüche, **dadurch gekennzeichnet, dass** der Kernreiter (7) aus festen Werkstoffen, insbesondere Hartgummi, Kunststoffen oder Metallen, besteht.

11. Fahrzeugreifen nach einem der vorherigen Ansprüche, **dadurch gekennzeichnet, dass** das drucksteife Stützprofil (6) am innen verlaufenden Felgenhorn (5a) des Rades ausgebildet ist.

12. Fahrzeugreifen nach einem der vorherigen Ansprüche, **dadurch gekennzeichnet, dass** dieser derart ausgestaltet ist, dass unter Vertikallast die radinnere Reifenseitenwand weiter in Richtung Felgenmitte einfedern kann, insbesondere so dass eine Spurverbreiterung bewirkt wird,

13. Fahrzeugreifen nach einem der vorherigen Ansprüche, **dadurch gekennzeichnet, dass** dieser derart ausgestaltet ist, dass bei zunehmende Seitenkraft die Aufstandsfläche des belasteten Reifens im Vergleich zu Reifen ohne Stützprofil, welches den Reifenwulst (3) und die Reifenseitenwand (10) in Richtung der Felgenmitte bewegt, länger parallel zur Fahrbahnoberfläche geführt wird.

14. Fahrzeugreifen nach einem der vorherigen Ansprüche, **dadurch gekennzeichnet, dass** das Stützprofil (6) in dem Kontaktbereich mit dem oberen Rand des Felgenhorns (5a) einen kleineren Radius aufweist als der Radius (R) des Felgenhorns im Kontaktbereich.

15. Fahrzeugreifen nach einem der vorherigen Ansprüche, **dadurch gekennzeichnet, dass** die radinnere Lauffläche des Reifens einen größeren Umfang, vorzugsweise 0,2 - 1 % mehr Umfang, als die radäußere Lauffläche des Reifens aufweist.

## Claims

1. Pneumatic vehicle tyre (1) with a tyre bead (3) that comprises a carcass (8) wrapped around core rings (2) and an apex (7, 7a, 7b),
wherein, when the tyre is mounted on a rim (4), a pressure-resistant support profile (6) is formed in such a way, between an outer face of the tyre side wall on the inside of the wheel and a rim flange (5a) on the inside of the wheel, that the tyre bead (3) and the tyre side wall (10) are moved in the direction of the rim centre,
**characterised in that**
the apex (7, 7a) has, at the level of the rim flange (5a) adjacent at that location, a formation (7b) facing towards the rim flange for forming the support profile.

2. Vehicle tyre according to any one of the preceding claims, **characterised in that** the apex (7, 7a, 7b) consists of materials of different strengths, in particular in such a way that the part (7b) of the apex facing the rim flange is capable of moving the tyre bead (3) and the tyre side wall (10) in the direction of the rim centre.

3. Vehicle tyre according to any one of the preceding claims, **characterised in that** the apex (7, 7a, 7b) comprises zones of different strengths, e.g. Shore hardness and/or pressure resistance, with the formation (7b) facing towards the rim flange preferably having a different, preferably higher, strength from the rest of the apex (7a).

4. Pneumatic vehicle tyre (1) with the features of the preamble of the claim 1, wherein the support profile is joined to the outer face of the tyre side wall, in particular by gluing or vulcanisation, **characterised in that** the support profile has high-strength tension means in the circumferential direction and is flexible in the radial direction.

5. Vehicle tyre according to claim 4, **characterised in that** high-tensile wire or aramid is provided as tension means, in particular in the form of windings extending in the circumferential direction.

6. Vehicle tyre according to claim 4 or 5, **characterised in that** rubber, in particular having a Shore hardness of at least 60, is provided as the flexible material.

7. Vehicle tyre according to any one of the preceding claims, **characterised in that** the tyre bead (3) is deflection-resistant.

8. Vehicle tyre according to any one of the preceding claims, **characterised in that** both tyre side walls (10, 11) can be moved equidirectionally by the support profile (6) so that the tyre body can be biased in the lateral direction of force against external reaction forces.

9. Vehicle tyre according to any one of the preceding claims, **characterised in that** the formation (7b) is configured in such a way that the deflection-resistant tyre bead (3) of the tyre (1), which is mounted on the rim and pressurized to a customary operational pressure, can be tilted between 5° and 20°, preferably between 11° and 16°, from the vertical towards the rim corner point in the direction of the rim centre so that the tyre obtains an asymmetrical cross section.

10. Vehicle tyre according to any one of the preceding claims, **characterised in that** the apex (7) consists of solid materials, in particular hard rubber, plastics or metals.

11. Vehicle tyre according to any one of the preceding claims, **characterised in that** the pressure-rigid support profile (6) is formed on the rim flange (5a) extending inside of the wheel.

12. Vehicle tyre according to any one of the preceding claims, **characterised in that** it is configured in such a way that the tyre side wall on the inside of the wheel can elastically yield further in the direction of the rim centre under a vertical load, in particular in such a way that a broadening of the track is caused.

13. Vehicle tyre according to any one of the preceding claims, **characterised in that** it is configured in such a way that, in the case of increasing lateral force, the contact surface of the tyre under strain is guided parallel to the road surface for a longer time compared with tyres without a support profile which moves the tyre bead (3) and the tyre side wall (10) in the direction of the rim centre.

14. Vehicle tyre according to any one of the preceding claims, **characterised in that** the support profile (6) has a radius in the area of contact with the upper edge of the rim flange (5a) that is smaller than the radius (R) of the rim flange in the area of contact.

15. Vehicle tyre according to any one of the preceding claims, **characterised in that** the tread of the tyre on the inside of the wheel has a larger circumference, preferably 0.2 - 1 % more circumference, than tread of the tyre on the outside of the wheel.

## Revendications

1. Pneu de véhicule (1) comprenant un talon de pneu (3) qui comprend une carcasse (8) qui est montée autour des anneaux de talon (2) et des jointes de talon (7, 7a, 7b),
dans lequel, le pneu étant monté sur une jante (4), un profilé d'appui (6) résistant à la pression est formé entre une face extérieure de la face latérale de pneu à l'intérieur de la roue et un rebord de jante (5a) à l'intérieur de la roue, de sorte que le talon de pneu (3) et la face latérale de pneu (10) sont déplacés en direction du centre de jante,
**caractérisé en ce que**
la jointe de talon (7, 7a) comprend une projection (7b) dirigée vers le rebord de jante au niveau du rebord de jante (5a) adjacent à la jointe de talon pour former le profilé d'appui.

2. Pneu de véhicule selon la revendication précédente, **caractérisé en ce que** les jointes de talon (7, 7a, 7b) sont composées des matières d'une résistance mécanique différente, notamment de sorte que la partie (7a) de la jointe de talon qui fait face au rebord de jante peut déplacer le talon de pneu (3) et la face latérale de pneu (10) en direction du centre de jante.

3. Pneu de véhicule selon l'une des revendications précédentes, **caractérisé en ce que** la jointe de talon (7, 7a, 7b) comprend des zones de résistance mécanique différente, par exemple de dureté Shore et/ou de résistance à la pression, la projection (7b) dirigée vers le rebord de jante comprenant de préférence une autre résistance mécanique, de préférence supérieure que le reste de la jointe de talon (7a).

4. Pneu de véhicule (1) comprenant les caractéristiques du préambule de la revendication 1, le profilé d'appui étant joint à la face extérieure de la face latérale de pneu, notamment par collage ou vulcanisation,
**caractérisé en ce que**
le profilé d'appui comprend des moyens de traction très résistants en direction circonférentielle et il est flexible en direction radiale.

5. Pneu de véhicule selon la revendication 4, **caractérisé en ce qu'**on prévoit du fil de fer ou de l'aramide très résistant à la traction en tant que moyens de traction, notamment sous forme d'enroulements qui s'étendent en direction circonférentielle.

6. Pneu de véhicule selon la revendication 4 ou la revendication 5, **caractérisé en ce qu'**on prévoit du caoutchouc en tant que matière flexible, notamment ayant une dureté Shore d'au moins 60.

7. Pneu de véhicule selon l'une des revendications précédentes, **caractérisé en ce que** le talon de pneu (3) est résistant à la flexion.

8. Pneu de véhicule selon l'une des revendications précédentes, **caractérisé en ce que** les deux faces latérales de pneu (10, 11) sont déplaçables de même sens grâce au profilé d'appui de sorte que le corps de pneu peut être précontraint en direction de force latérale contre des forces de réaction extérieures.

9. Pneu de véhicule selon l'une des revendications précédentes, **caractérisé en ce que** la projection (7b) est configurée de sorte que le talon de pneu (3) résistant à la flexion du pneu (1) monté sur la jante et soumis à la pression intérieure d'air usuelle en action peut être basculé de 5° à 20°, de préférence de 11° à 16°, à partir de la verticale vers le point d'angle de jante en direction du centre de jante, de sorte que le pneu épouse une section transversale asymétrique.

10. Pneu de véhicule selon l'une des revendications précédentes, **caractérisé en ce que** la jointe de talon (7) est composée des matières solides, notamment du caoutchouc durci, des matières artificielles ou des métaux.

11. Pneu de véhicule selon l'une des revendications précédentes, **caractérisé en ce que** le profilé d'appui (6) résistant à la pression est ménagé au rebord de jante (5a) qui s'étend à l'intérieur.

12. Pneu de véhicule selon l'une des revendications précédentes, **caractérisé en ce que** celui-ci est configuré de sorte que sous charge verticale la face latérale de pneu à l'intérieur de la roue peut se déplacer élastiquement plus en direction du centre de jante, de sorte qu'on obtient notamment une voie élargie.

13. Pneu de véhicule selon l'une des revendications précédentes, **caractérisé en ce que** celui-ci est configuré de sorte que si la force latérale augmente, la surface d'appui du pneu chargé sera guidé davantage en parallèle à la surface de la route en comparaison des pneus sans profilé d'appui qui déplace le talon de pneu (3) et la face latérale de pneu (10) en direction du centre de jante.

14. Pneu de véhicule selon l'une des revendications précédentes, **caractérisé en ce que** dans la zone de contact avec le bord supérieur du rebord de jante (5a) le profilé d'appui (6) comprend un rayon inférieur au rayon (R) du rebord de jante dans la zone de contact.

15. Pneu de véhicule selon l'une des revendications précédentes, **caractérisé en ce que** la bande d'usure du pneu à l'intérieur de la roue comprend un plus grand périmètre, de préférence un périmètre de 0,2-1% de plus, que celui de la bande d'usure du pneu à l'extérieur de la roue.
